# EUROPEAN PATENT SPECIFICATION

(11) **EP 3 886 611 B1**
(45) Date of publication and mention of the grant of the patent: **11.09.2024**
(21) Application number: 19824427.9
(22) Date of filing: 26.11.2019
(51) Int. Cl.: A23L 33/00, A23L 2/52, A61K 9/00, A23L 29/212, A23L 29/30, A23L 33/125, A61K 47/36

(54) **ISOTONIC HIGH-ENERGY SPORTS GELS**
ISOTONISCHE HOCHENERGETISCHE SPORTGELE
GELS ISOTONIQUES POUR SPORTS DE GRANDE ÉNERGIE

(30) Priority: 26.11.2018 EP 18208383
(43) Date of publication of application: 06.10.2021
(73) Proprietor: Cargill, Incorporated, Wayzata, Minnesota 55391 (US)
(72) Inventor: VAN BOKKELEN, Reginald, 1800 Vilvoorde (BE); VAN NIEUWENHUYZE, Lutgart, 1800 Vilvorde (BE)
(74) Representative: Forresters IP LLP
(86) International application number: PCT/US2019/063185
(87) International publication number: WO 2020/112727

(56) References cited:
- EP-A1- 3 298 907
- EP-A2- 1 310 173
- WO-A1-2007/083117
- WO-A2-2016/106018
- WO-A2-97/07690
- CN-A- 105 962 346
- GB-A- 2 530 627
- GB-A- 2 562 260
- US-A1- 2005 095 271
- US-A1- 2011 020 496
- US-A1- 2018 255 817
- DATABASE WPI Week 200875, 2008 Derwent World Patents Index; AN 2008-M70334, XP002791056

## Description

### TECHNICAL FIELD

This invention relates to an isotonic high-energy sports gel for consumption by athletes.

### BACKGROUND

Athletes participating in endurance sports such as cycling, running, climbing and the like, require energy supplements that are light and easy to carry, quickly consumed and efficiently absorbed by the body and transformed into available energy.
A variety of energy supplements exist on the market, including sport drinks, energy bars and concentrated viscous liquids, such as gels.

Gels are increasing in popularity with athletes, as they can be formulated into a dense, calorie-rich, easily consumed and quickly digested product. These are packaged into flexible, tearable pouches, packets or tubes that are easily torn open such that the contents can be directly administered into the athletes mouth with a single squeeze.

Such gels typically contain one or more carbohydrate sources such as glucose, fructose, high fructose corn syrup, sucrose, maltodextrin and the like. It is known that if the composition is isotonic, i.e. having an osmotic value or osmolality, which is similar to that of body fluids, the carbohydrates of such a beverage can be more efficiently and rapidly absorbed from the gastrointestinal tract.

In the field of isotonic foodstuff, WO 2007083117 discloses the use of two gelling agents and a maltodextrin. Preferably, the maltodextrin has a dextrose equivalent (DE) of 15 or less and may have an average molecular weight of greater than 1800. According to the description, the gel may comprise the carbohydrate in an amount of between 250 and 500 g/l i.e. about 25 to 50wt%. The only example provided however has a carbohydrate content of only about 36wt%.

This also reflects the isotonic energy gels currently available on the market. Such products have a maximum maltodextrin content of only about 36wt% in a 60ml serving. This means that an athlete will need to regularly consume (about every 20 minutes - 3 servings an hour) another serving to maintain energy levels for an optimum athletic performance. It is desirable to reduce the recommended frequency of intake to avoid interruptions during athletic performance.

However, if the amount of maltodextrin as described in WO 2007083117 is increased in an attempt to reduce the frequency of intake, isotonicity is lost. The composition becomes hypertonic and more difficult to digest resulting in cramps and discomfort. There is thus a need to find an isotonic composition in gel form that comprises a higher concentration of a carbohydrate source, preferably without requiring gelling agents, which can be consumed less frequently.

US 2005/0095271 discloses the use of a high-energy composition containing up to 60 % maltodextrin and 9% fructose. This composition requires the athlete to drink additional water after consuming the gel to create isotonicity within the body. However, if insufficient water is consumed, the result is a hypertonic solution in the body that may actually have a dehydrating effect on the consumer. If too much water is consumed, the result is a hypotonic solution in the body that will hydrate the consumer, but with reduced energy replenishment. There is thus the need for a more simple solution that does not require the athlete to consume additional water.

When any of the commercial compositions or maltodextrin compositions described in the documents above were used in the preparation of a 50wt% maltodextrin sports gel, isotonicity, gel stability, texture and taste were suboptimal, giving unsatisfactory performances. It is desirable that a high-energy sports gel matches the tonicity of body fluids. Otherwise the intake will trigger gastro-intestinal distress and will reduce endurance performances. It is also desirable that the texture of the high-energy sports gel remains unchanged during prolonged shelf-life, i.e. remains semi-solid (as a gel) and does not change into a solid that cannot flow freely upon squeezing or pouring.

There remains an unmet need for a maltodextrin alternative for producing a high energy isotonic sports gel that remains adequately stable and semi-solid during prolonged storage without the addition of gelling agents and dilution following consumption.

Therefore, there is a need to increase the carbohydrate content in a nutritional formulation in gel form whilst maintaining its isotonicity and other characteristics, such as easy consumption, pleasant mouth feel, texture, taste including sweetness, and stability and prolonged shelf-life. At least one of these objectives have been fulfilled according to the claims of the current invention.

### SUMMARY OF THE INVENTION

In accordance with the invention a nutritional composition in gel form is provided, comprising at least 40wt% of one or more maltodextrin(s) having:
(i) a dextrose equivalent (DE) of from 0.5 to 4, preferably 1 to 3.5, more preferably 2 to 3; and
(ii) an amylose content below 5wt% by weight of the partially hydrolyzed starch, preferably below 3wt%, more preferably below 1wt%; and
wherein the composition has an osmolality ranging from 270 to 330 mOmol kg⁻¹, as measured using a vapor pressure osmometer by the method described below.

The invention also provides a package comprising the nutritional composition as provided by the claims in an amount of from 40 to 150ml, preferably from 50 to 100ml, more preferably from 55 to 75ml.

The invention also provides a process for preparing the nutritional composition as provided by the claims comprising the following steps:
(i) Combining the one or more maltodextrin(s) with water at a temperature from 60 to 90°C and optionally one or more food ingredients selected from natural or artificial flavoring agents, natural or artificial coloring agents, non-nutritive sweeteners, preservatives, acidity regulators, vitamins, minerals, amino acids, fats, gelling agents, antioxidants, caffeine, taurine and electrolytes to form a gel;
(ii) Deaerating the gel from step (i); and
(iii) Optionally, heat-treating the gel by pasteurization or by ultra-high temperature treatment.

The invention also provides the use of the nutritional composition as provided by the claims for consumption, preferably during an athletic performance to enhance said performance, wherein only one or two 55 to 75ml servings of the nutritional composition are consumed per hour.

The invention also provides the use of the nutritional composition as provided by the claims for enhancing athletic performance, preferably endurance performance.

### DETAILED DESCRIPTION OF THE INVENTION

The composition of the invention is a "nutritional composition", meaning the composition is suitable for eating and provides energy in the form of calories to the consumer.

The composition is in "gel form", meaning the composition is in a semi-solid state. A gel is a non-fluid network characterized by a continuous liquid throughout its whole volume.

The nutritional composition comprises at least 40wt%, preferably 40 to 60wt%, more preferably from 45 to 55wt%, even more preferably from 48 to 52wt%, most preferably around 49 to 51wt%, of one or more maltodextrin(s) having:
(i) a dextrose equivalent (DE) of from 0.5 to 4, preferably 1 to 3.5, more preferably 2 to 3; and
(ii) an amylose content below 5wt% by weight of the partially hydrolyzed starch, preferably below 3wt%, more preferably below wt%; and wherein the composition has an osmolality ranging from 270 to 330 mOmol kg⁻¹, as measured using a vapor pressure osmometer by the method defined below.

The maltodextrin Maltodextrin is generally defined as a partially hydrolyzed starch with a dextrose equivalent (DE) of less than 20. The terms "maltodextrin", "dextrin" or "partially hydrolyzed starch" are used herein interchangeably and refer to a polysaccharide having a structure of D-glucose units linked together with glycosidic bonds in chains of varying length.

Preferably, the one or more maltodextrin has at most 11wt% on a dry weight basis a degree of polymerization of 13 (DP13).

Further details on preparing the maltodextrin according to the invention are provided below.

### Dextrose equivalent (DE)

The term "dextrose equivalent (or DE)" as used herein refers the amount of reducing sugars present in a sugar product, expressed as a percentage on a dry basis relative to D-glucose. One way to measure this is by end group titration, which measures the number of reducing aldehyde groups per mass relative to D-glucose. The standard method for determining DE below 20 is the Luff-Schoorl method (Schoorl N. 1929. Suiker-titrarie. ChemWeekbl 5:130), which is based on the reduction of copper(II) to copper(I) by the aldehyde moiety on the terminal reducing sugars.

Unhydrolyzed starch has a DE value of 0, while the DE value of anhydrous D-glucose is 100.

According to the invention, the has a DE of from 0.5 to 4, preferably 1 to 3.5, more preferably 2 to 3.5, most preferably 2 to 3.

### Number average molecular weight (Mn)

According to the invention, the maltodextrin preferably has a number average molecular weight Mn of 3500 to 9000 Daltons, preferably 4000 to 7000 Daltons, more preferably 4000 to 6000 Daltons. The weight average molecular weight is inversely related to the DE value.

The number average molecular weight Mn can be measured using GPC according to standard methods known in the art.

### Amylose content

The botanical origin of the starch is not restricted. Starch can thus be derived from any source, such as cereals, roots such as potatoes or cassava, fruits such as bananas, peas and the like or mixtures thereof. Preferably, the starch is derived from cereals or from tapioca or pulses, more preferably the starch is derived from cereal, even more preferably the starch is derived from wheat, corn, oat, barely or rice, most preferably the starch is derived wheat or corn.

Preferably further, the starch is a native starch. Native starches are produced through the separation of naturally occurring starch from starch containing plant material. The native starch still retains its original granular structure and characteristics. Thus preferably, the starch is native wheat and/or native corn starch.

According to the invention, the maltodextrin must have a low amylose content i.e. below 5wt% by weight of the carbohydrate, preferably below 3wt%, more preferably below 1wt%. This can be achieved by using waxy starches, which are made primarily of amylopectin and lack significant amounts of amylose. Botanical origin for waxy starches are known in the art and may be derived from corn, potato, wheat, barley, tapioca, etc. The starch is thus preferably a waxy corn starch from waxy corn, waxy rice starch from waxy rice or waxy potato starch from waxy potatoes.

However, the low amylose content can also be achieved by chemically or enzymatically removing and/or converting the amylose present in a non-waxy common starch. Enzymes, which can convert the amylose, are known to the person skilled in the art.

Amylose content can be measured according to standard methods known in the art, for example by using the iodine staining test (Juliano 1971, "A simplified assay for milledrice amylose", Cereal Sci. Today 16:334).

### Electrical conductivity

In order to have an acceptable taste, maltodextrin starch used in the nutritional composition according to the invention preferably has an electrical conductivity of below 50µScm⁻¹, preferably below 20µScm⁻¹. Electrical conductivity can be measured on a conductivity meter, for example on a Mettler Toledo 5 Easy FE30.

This level of electrical conductivity can be achieved by refining the maltodextrin. The refining process reduces the amount of electrically conductive impurities and reduces the content of any compounds and volatiles that may contribute to an off-taste. The maltodextrin can be refined by conventional refining methods, known in the art. For example, refining methods include filtration through diatomaceous earth on a fixed or rotary vacuum filter, centrifugation, flocculation, flotation and the like, and treatment with vegetable carbon and ion exchange resins. Preferably, maltodextrin is refined over an ion exchange resin. This may be followed by polishing maltodextrin on a cationic exchange resin.

### Process for manufacturing the maltodextrin

One skilled in the art will appreciate that the commercial production of maltodextrins, as is known in the art, may include the steps of (1) liquefaction (gelatinization or solubilization of starch); (2) saccharification (hydrolysis, specific DE attainment); (3) clarification (removal of insoluble); (4) optionally refining using a carbon column or ion exchange resin; (5) evaporation to increase solids concentration; and (6) liquid maltodextrin load-out or spray drying.

As is known in the art, there are many ways to complete the hydrolysis in step (2) chemically e.g. with an acid or enzymatically e.g. with an alpha-amylase. The person skilled in the art knows how to set the reaction conditions in order to achieve the desired DE, as claimed.

### Process for manufacturing the nutritional composition

The nutritional composition according to the invention can be prepared by:
(i) Combining the one or more maltodextrin(s) with water at a temperature from 60 to 90°C and optionally one or more food ingredients selected from natural or artificial flavoring agents, natural or artificial coloring agents, non-nutritive sweeteners, preservatives, acidity regulators, vitamins, minerals, amino acids, fats, gelling agents, antioxidants, caffeine, taurine and electrolytes to form a gel;
(ii) Deaerating the gel from step (i); and
(iii) Optionally, heat-treating the gel by pasteurization or by ultra-high temperature treatment.

Step (i) can be carried out according to known methods in the art. The partially maltodextrin and hot water at 60 to 90°C automatically form a gel when combined. The maltodextrins according to the invention already have desirable gelling properties, such that additional gelling agents are not required in the nutritional composition.

In step (i), if both acidity regulators and preservatives are used, preferably these are added separately. More preferably, any acidity regulators are combined with the maltodextrin and water first, before any addition of preservatives.

In step (ii), the gel can be deaerated according to any known method in the art. Preferably, the gel can be deaerated by resting the gel at ambient temperatures for at least 24 hours, applying a vacuum to it, by treating the gel with ultrasound or by passing nitrogen gas through the gel.

In step (iii), the gel can be heat-treated according to methods known in the art. Preferably, if the pH of the gel is at most 4.5, the gel is heat-treated in step (iii) by pasteurization, which can be carried out, for example, at 95 to 98°C for 30 to 60min. Preferably, if the pH of the gel is above 4.5, the gel is treated at ultra-high temperature (UHT) in step (iii), which can be carried out, for example, at 140 to 142°C for 4 to 10min.

The nutritional composition comprises at least 40wt% of the one or more maltodextrin, preferably 40 to 60wt%, more preferably from 45 to 55wt%, even more preferably from 48 to 52wt%, most preferably around 49 to 51wt%.

The nutritional composition comprises at most 60wt% of water, preferably 40 to 60wt%, more preferably from 45 to 55wt%, even more preferably from 48 to 52wt%, most preferably around 49 to 51wt% of water.

The nutritional composition according to the invention may further include one or more other food ingredients. Preferably these are selected from natural or artificial flavoring agents, natural or artificial coloring agents, non-nutritive sweeteners, preservatives, acidity regulators, vitamins, minerals, amino acids, fats, gelling agents, antioxidants, caffeine, taurine and electrolytes.

Natural or artificial flavoring agents are preferably selected from apple, banana, blackcurrant, blueberry, caramel, cherry, chocolate, cinnamon, coffee, cranberry, grape, grapefruit, honey, kiwi, lemon, lime, lemon-lime, mango, mint, orange, peach, pineapple, raspberry, strawberry, tangerine, vanilla, watermelon and equivalents thereof.

### Osmolality

Surprisingly, it was found that a maltodextrin having the properties as mentioned above can be used to prepare a nutritional composition in gel form without using any gelling agents.

Furthermore, it was found that the nutritional composition according to the invention has an osmolality of 270 to 330 mOmol kg⁻¹. This equates to a composition, which is isotonic i.e. having a tonicity which is similar to that of body fluids. As is known in the art, an isotonic sports gel or beverage will be absorbed by the body much faster without the associated side effects of a hypertonic product, such as gastro-intestinal distress.

The osmolality of the composition according to the invention can be determined using a vapor pressure osmometer according to standard methods known in the art. An example of a suitable osmometer is the VAPRO^{®} Model 5600, which can be calibrated according to its operating manual. The following method can be used, following the teaching of Rong et al. (Vol. 74, Nr. 1, pages C33-C40, 2009, Journal of Food Science):
(i) Identify the linear operating range using a number of reference samples having known concentrations of 2.5 to 50wt% of maltodextrin.
(ii) In this range, measure at least 6 concentrations with a target having an RSD (relative standard deviation) below 5%.
(iii) Run a linear regression of osmolality against mass fraction (grams of maltodextrin per gram of water). Target of the linear regression is an R² of at least 0.9.
(iv) Use the derived equation to extrapolate the osmolality of the nutritional composition according to the invention, depending on the concentration of the maltodextrin.

### Turbidity

The nutritional composition preferably has a turbidity of below 50 NTU.

Turbidity is determined in Nephelometric Turbidity Units (NTU) using a nephelometer (also known as a turbidimeter, e.g. Hach 2100N-Germany), which measures the propensity of particles in the liquid to scatter light.

### Textural properties

Textural properties of the nutritional composition can be measured on a Texture Analyzer, TA.XT.Plus (from Stable Microsystems, UK). The instrument was operated at a test speed = 2 mm/s and a post test speed = 0.8 mm/s, at a distance = 30 mm, with automatic detection of the force with a 5kg load cell (trigger force =5g. force). The textural data (force vs time) was analyzed by the instrument software (TEE 32) and the desired parameters (e.g. hardness (in g), gumminess ratio) were determined. The nutritional composition according to the invention preferably has a hardness of from 60g to 200g, more preferably 65g to 120g, even more preferably 70g to 100g, most preferably around 80g. The nutritional composition according to the invention preferably has a gumminess of from 60 to 200, more preferably of from 70 and 130, even more preferably of from 80 to 100, most preferably around 90.

### Packaging & use

The nutritional composition according to the invention can be packaged into individual servings which are 40 to 150ml, preferably from 50 to 100ml, more preferably from 55 to 75ml, most preferably around 60ml in size.

The package can be a flexible pouch, packet or tube. Preferably the package can be easily torn open by hand or in the mouth.

Preferably, a maximum of two 55 to 75ml servings are consumed per hour.

The nutritional composition can be used to maintain and enhance athletic performance. Preferably, the nutritional compositions are used during endurance performances, such as long-distance running, cycling, swimming etc.

### EXAMPLES ILLUSTRATING THE INVENTION

### SAMPLES 1 AND 2 AND COMPARATIVE SAMPLES 1 to 6

Nutritional compositions in gel form were prepared according to the examples in Table 1 below by:
(i) 50wt% maltodextrin was combined with 49.9wt% water and 0.1wt% of sodium benzoate preservative having a temperature of 70°C in a high-shear mixture until full hydration of the maltodextrin was achieved to obtain a gel;
(ii) The gel was deaerated by leaving the gel overnight to settle.

The maltodextrin used in each example are shown in Table 1 below.

**Table 1**

| | **Maltodextrin properties** | | | | | **Gel at 50wt%?** | **Vapor Pressure osmolality (mOmol kg⁻¹) at 50wt%** |
|---|---|---|---|---|---|---|---|
| | **Average DE** | **Origin of the starch** | **Amylose content / wt%** | **Refined** | **Conductivity (µScm⁻¹)** | | |
| **Sample 1** | 1.0 | waxy corn | <1wt% | No | 297.5 | Yes | 312.9 |
| **Sample 2** | 2.0 | waxy corn | <1wt% | Yes | 14.4 | Yes | 264.0 |
| **Comparative Sample 1** | 2.6 | potato starch | >20wt% | No | 806 | No | 321.1 |
| **Comparative Sample 2** | 5.0 | Corn | >20wt% | No | 310 | No | 376.0 |
| **Comparative Sample 3** | 6.5 | waxy corn | <1wt% | Yes | 28.5 | Yes | 393.8 |
| **Comparative Sample 4** | 9.0 | waxy corn | <1wt% | Yes | 4.71 | Yes | 423.7 |
| **Comparative Sample 5** | 14 | corn | >20wt% | No | 28.1 | No | 798.0 |
| **Comparative Sample 6** | 17 | corn | >20wt% | Yes | 11.06 | Yes | 753.8 |

| | | | | | | | |
|---|---|---|---|---|---|---|---|
| DE was measured according to the Luff-Schoorl titration method. | | | | | | | |

Maltodextrin obtained from a waxy starch source had an amylose content of less than 1wt% of the maltodextrin. Maltodextrin obtained from a common starch source had an amylose content of more than 20wt% of the maltodextrin.

Starches that were refined where passed over an ion exchange resin to remove impurities and off-taste.

Electrical conductivity was measured on a conductivity meter, Mettler Toledo 5 Easy FE30.

Osmolality was measured on a VAPRO^{®} Model 5600 vapor pressure osmometer, which was calibrated according to its operating instructions. The following method was used to extrapolate the osmolality of the low DE maltodextrin which follows the teaching of Rong et al. (Vol. 74, Nr. 1, pages C33-C40, 2009, Journal of Food Science):
(i) The linear operating range was identified using a number of reference samples having known concentrations of 2.5 to 50wt% of maltodextrin.
(ii) In this range, at least 6 concentrations were measured having a target RSD (relative standard deviation) below 5%.
(iii) A linear regression of osmolality against mass fraction (grams of maltodextrin per gram of water) was determined using the osmolality results from step (ii). The target of the linear regression was an R² of at least 0.9.
(iv) The derived linear equation was then used to extrapolate the osmolality of the nutritional composition according to the invention, depending on the desired concentration.

The isotonic examples according to the prior art (see the example disclosed in WO 2007083117) and currently commercially available isotonic gels only reach a concentration of 36wt%. An athlete needs to consume a 60ml serving of a 36wt% maltodextrin every 20 minutes in order to maintain his or her energy levels and reach optimum athletic performance. As shown in the table above, increasing the concentration of maltodextrin used in comparative samples 1 to 6 to 50wt%, the composition either solidifies and/or becomes hypertonic. If the product is too solid, it cannot be easily squeezed out of a pouch and consumed. If the product is a gel, but hypertonic, it will not be efficiently absorbed by the body and may cause digestive discomfort.

However, Samples 1 and 2 according to the invention use specific maltodextrin i.e. having a low DE, low amylose content (i.e. derived from waxy starches), and which are refined. Such maltodextrin can be used to prepare isotonic gels with a high amount of maltodextrin e.g. at a concentration of 50wt%. This allows the athlete to consume just one serving of 55-75ml every half an hour in order to reach optimum athletic performance and also allows the athlete to focus on his performance for longer uninterrupted periods.

Having an osmolality within the isotonic range of 270 to 330 mOmol kg⁻¹, examples 1 and 2 will allow efficient absorption and metabolism of maltodextrin in the body, without triggering any gastro-intestinal distress.

The nutritional compositions of Samples 1 and 2 can be obtained in gel form without using any gelling agents. Being in the form of a gel, the servings are easily quickly consumed with a squeeze from a flexible pouch or similar packaging.

Furthermore, Samples 1 and 2 maintain the same texture, mouthfeel, taste, including sweetness, as the examples of the prior art (see the example disclosed in WO 2007083117).

Finally, Samples 1 and 2 are stable gels and maintain their texture during prolonged shelf-life, i.e. they remain semi-solid (as a gel) and do not change into a solid that cannot flow freely upon squeezing or pouring.

### EXAMPLE OF A NUTRITIONAL COMPOSITION

A nutritional composition according to Table 2 was prepared using the maltodextrin as used in Sample 1:
(i) 613g of maltodextrin (as used in Sample 1) with 614.2g of water having a temperature of 70°C and 0.5wt% citric acid were combined and mixed in a high-shear mixture until full hydration of the maltodextrin was achieved. The remaining ingredients were then added as provided in Table 2 and further mixed in the high-shear mixture to obtain a homogeneous gel.
(ii) The gel was deaerated by leaving the gel overnight to settle.

**Table 2**

| **Ingredients** | **g** |
|---|---|
| Maltodextrin from Sample 1 | 613.0 |
| Potassium sorbate | 0.15 |
| Sodium benzoate | 0.1 |
| Citric acid | 0.5 |
| Orange flavour | 0.2 |
| Truvia Ra 80 | 0.3 |
| Salt | 0.09 |
| Water | 614.2 |

## Claims

1. A nutritional composition in gel form comprising at least 40wt% of one or more maltodextrin(s) having:
(i) a dextrose equivalent (DE) of from 0.5 to 4, preferably 1 to 3.5, more preferably 2 to 3; and
(ii) an amylose content below 5wt% of the maltodextrin, preferably below 3wt%, more preferably below 1wt%;
and wherein the composition has an osmolality ranging from 270 to 330 mOmol kg⁻¹ as determined using a vapor pressure osmometer, by the method defined in the description.

2. The nutritional composition according to claim 1 comprising from 40 to 60wt% of one or more maltodextrin, preferably from 45 to 55wt%, more preferably from 48 to 52wt%, most preferably around 49 to 51wt%.

3. The nutritional composition according to any one of the previous claims wherein the one or more maltodextrin has a number average molecular weight Mn of 3500 to 9000 Daltons, preferably 4000 to 7000 Daltons, more preferably 4000 to 6000 Daltons.

4. The nutritional composition according to any one of the previous claims wherein the one or more maltodextrin has at most 11wt% on a dry weight basis a degree of polymerization of 13 (DP13).

5. The nutritional composition according to any one of the previous claims wherein the one or more maltodextrin is derived from a waxy starch, preferably a waxy corn starch, a waxy wheat starch, a waxy potato starch or a waxy rice starch.

6. The nutritional composition according to any one of the previous claims wherein the one or more maltodextrin has an electrical conductivity of below 50µScm⁻¹, preferably below 20µScm⁻¹.

7. The nutritional composition according to any one of the previous claims, further including one or more other food ingredients selected from natural or artificial flavoring agents, natural or artificial coloring agents, non-nutritive sweeteners, preservatives, acidity regulators, vitamins, minerals, amino acids, fats, gelling agents, antioxidants, caffeine, taurine and electrolytes; wherein the one or more natural or artificial flavoring agents are preferably selected from flavors of apple, banana, blackcurrant, blueberry, caramel, cherry, chocolate, cinnamon, coffee, cranberry, grape, grapefruit, honey, kiwi, lemon, lime, lemon-lime, mango, mint, orange, peach, pineapple, raspberry, strawberry, tangerine, vanilla, watermelon and equivalents thereof.

8. The nutritional composition according to any one of the previous claims, wherein the composition has a turbidity of below 50 NTU.

9. A package comprising from 40 to 150ml, preferably from 50 to 100ml, more preferably from 55 to 75ml of the nutritional composition according to any one of the previous claims.

10. The package according to claim 9 selected from a flexible pouch, packet or tube.

11. A process for preparing the nutritional composition according to any one of claims 1 to 8 comprising the following steps:
(i) Combining the one or more maltodextrin with water at a temperature from 60 to 90°C and optionally one or more food ingredients selected from natural or artificial flavoring agents, natural or artificial coloring agents, non-nutritive sweeteners, preservatives, acidity regulators, vitamins, minerals, amino acids, fats, gelling agents, antioxidants, caffeine, taurine and electrolytes to form a gel;
(ii) Deaerating the gel from step (i); and
(iii) Optionally, heat-treating the gel by pasteurization or by ultra-high temperature treatment.

12. The process according to claim 11 wherein in step (ii), the gel is deaerated by applying a vacuum, by treating the gel with ultrasound or by passing nitrogen gas through the gel.

13. The process according to claim 11 or 12 wherein in step (iii),
a. if the pH of the gel is at most 4.5, the gel is heat-treated by pasteurization, preferably at 95 to 98°C for 30 to 60min,
b. if the pH of the gel is above 4.5, the gel is treated at ultra-high temperature (UHT), preferably at 140 to 142°C for 4 to 10min.

14. Use of the nutritional composition according to any one of claims 1 to 8 for consumption, preferably during an athletic performance to enhance said performance, wherein only one or two 55 to 75ml servings of the nutritional composition are consumed per hour.

## Patentansprüche

1. Nährstoffzusammensetzung in Gelform, umfassend zu mindestens 40 Gew.-% ein oder mehrere Maltodextrin(e), aufweisend:
(i) ein Dextroseäquivalent (DE) von 0,5 bis 4, vorzugsweise 1 bis 3,5, mehr bevorzugt 2 bis 3; und
(ii) einen Amylosegehalt von unter 5 Gew.-% des Maltodextrins, vorzugsweise unter 3 Gew.-%, mehr bevorzugt unter 1 Gew.-%;
und wobei die Zusammensetzung eine Osmolalität aufweist, die von 270 bis 330 mOmol kg⁻¹ reicht, wie unter Verwendung eines Dampfdruckosmometers, mittels des in der Beschreibung definierten Verfahrens, bestimmt.

2. Nährstoffzusammensetzung nach Anspruch 1, umfassend von zu 40 bis 60 Gew.-% ein oder mehrere Maltodextrine, vorzugsweise von zu 45 bis 55 Gew.-%, mehr bevorzugt von zu 48 bis 52 Gew.-%, am meisten bevorzugt zu etwa 49 bis 51 Gew.-%.

3. Nährstoffzusammensetzung nach einem der vorstehenden Ansprüche, wobei das eine oder die mehreren Maltodextrine ein zahlenmittleres Molekulargewicht Mn von 3500 bis 9000 Dalton, vorzugsweise 4000 bis 7000 Dalton, mehr bevorzugt 4000 bis 6000 Dalton aufweisen.

4. Nährstoffzusammensetzung nach einem der vorstehenden Ansprüche, wobei das eine oder die mehreren Maltodextrine zu höchstens 11 Gew.-%, auf einer Trockengewichtsbasis, einen Polymerisationsgrad von 13 (DP13) aufweisen.

5. Nährstoffzusammensetzung nach einem der vorstehenden Ansprüche, wobei das eine oder die mehreren Maltodextrine von einer Wachsstärke, vorzugsweise einer Wachsmaisstärke, einer Wachsweizenstärke, einer Wachskartoffelstärke oder einer Wachsreisstärke, stammen.

6. Nährstoffzusammensetzung nach einem der vorstehenden Ansprüche, wobei das eine oder die mehreren Maltodextrine eine elektrische Leitfähigkeit von unter 50 µScm⁻¹, vorzugsweise unter 20 µScm⁻¹ aufweisen.

7. Nährstoffzusammensetzung nach einem der vorstehenden Ansprüche, ferner einschließlich einer oder mehrerer anderer Lebensmittelzutaten, die aus natürlichen oder künstlichen Aromastoffen, natürlichen oder künstlichen Farbstoffen, Süßungsmitteln ohne Nährwert, Konservierungsmitteln, Säureregulatoren, Vitaminen, Mineralien, Aminosäuren, Fetten, Geliermitteln, Antioxidantien, Koffein, Taurin und Elektrolyten ausgewählt sind; wobei der eine oder die mehreren natürlichen oder künstlichen Aromastoffe vorzugsweise aus Aromen von Apfel, Banane, schwarze Johannisbeere, Heidelbeere, Karamell, Kirsche, Schokolade, Zimt, Kaffee, Cranberry, Traube, Grapefruit, Honig, Kiwi, Zitrone, Limette, Zitrone-Limette, Mango, Minze, Orange, Pfirsich, Ananas, Himbeere, Erdbeere, Mandarine, Vanille, Wassermelone und Äquivalenten davon ausgewählt sind.

8. Nährstoffzusammensetzung nach einem der vorstehenden Ansprüche, wobei die Zusammensetzung eine Trübung von unter 50 NTU aufweist.

9. Verpackung, umfassend von 40 bis 150 ml, vorzugsweise von 50 bis 100 ml, mehr bevorzugt von 55 bis 75 ml der Nährstoffzusammensetzung nach einem der vorstehenden Ansprüche.

10. Verpackung nach Anspruch 9, die aus einem flexiblen Beutel, einer flexiblen Packung oder einer flexiblen Röhre ausgewählt ist.

11. Prozess zum Herstellen der Nährstoffzusammensetzung nach einem der Ansprüche 1 bis 8, umfassend die folgenden Schritte:
(i) Kombinieren des einen oder der mehreren Maltodextrine mit Wasser bei einer Temperatur von 60 bis 90 °C und optional einem oder mehreren Lebensmittelzutaten, die aus natürlichen oder künstlichen Aromastoffen, natürlichen oder künstlichen Farbstoffen, Süßungsmitteln ohne Nährwert, Konservierungsmitteln, Säureregulatoren, Vitaminen, Mineralien, Aminosäuren, Fetten, Geliermitteln, Antioxidantien, Koffein, Taurin und Elektrolyten ausgewählt sind, um ein Gel zu formen;
(ii) Entlüften des Gels aus Schritt (i); und
(iii) Optional, Wärmebehandeln des Gels mittels Pasteurisierung oder Ultrahochtemperaturbehandlung.

12. Prozess nach Anspruch 11, wobei in Schritt (ii) das Gel mittels Anlegens eines Vakuums, mittels Behandelns des Gels mit Ultraschall oder mittels Durchführens von Stickstoffgas durch das Gel entlüftet wird.

13. Prozess nach Anspruch 11 oder 12, wobei in Schritt (iii),
a. falls der pH-Wert des Gels höchstens 4,5 beträgt, das Gel mittels Pasteurisierung wärmebehandelt wird, vorzugsweise bei 95 bis 98 °C für 30 bis 60 min,
b. falls der pH-Wert des Gels über 4,5 beträgt, das Gel bei Ultrahochtemperatur (UHT), vorzugsweise bei 140 bis 142 °C, für 4 bis 10 min behandelt wird.

14. Verwendung der Nährstoffzusammensetzung nach einem der Ansprüche 1 bis 8 für einen Verzehr, vorzugsweise während einer sportlichen Leistung, um die Leistung zu steigern, wobei nur eine oder zwei Portionen von 55 bis 75 ml der Nährstoffzusammensetzung pro Stunde verzehrt werden.

## Revendications

1. Composition nutritionnelle sous forme de gel comprenant au moins 40 % en poids d'une ou plusieurs maltodextrine(s) ayant :
(i) un équivalent en dextrose (DE) allant de 0,5 à 4, de préférence 1 à 3,5, plus préférablement 2 à 3 ; et
(ii) une teneur en amylose inférieure à 5 % en poids de la maltodextrine, de préférence inférieure à 3 % en poids, plus préférablement inférieure à 1 % en poids ;
et dans laquelle la composition a une osmolalité allant de 270 à 330 mOmol kg⁻¹ telle que déterminée à l'aide d'un osmomètre à pression de vapeur, par le procédé défini dans la description.

2. Composition nutritionnelle selon la revendication 1 comprenant de 40 à 60 % en poids d'une ou plusieurs maltodextrines, de préférence de 45 à 55 % en poids, plus préférablement de 48 à 52 % en poids, le plus préférablement d'environ 49 à 51 % en poids.

3. Composition nutritionnelle selon l'une quelconque des revendications précédentes dans laquelle la ou les maltodextrines ont une masse moléculaire moyenne en nombre Mn de 3 500 à 9 000 Daltons, de préférence de 4 000 à 7 000 Daltons, plus préférablement de 4 000 à 6 000 Daltons.

4. Composition nutritionnelle selon l'une quelconque des revendications précédentes dans laquelle la ou les maltodextrines ont au plus 11 % en poids sur une base de poids sec un degré de polymérisation de 13 (DP13).

5. Composition nutritionnelle selon l'une quelconque des revendications précédentes dans laquelle la ou les maltodextrines sont dérivées d'un amidon cireux, de préférence un amidon de maïs cireux, un amidon de blé cireux, un amidon de pomme de terre cireux ou un amidon de riz cireux.

6. Composition nutritionnelle selon l'une quelconque des revendications précédentes dans laquelle la ou les maltodextrines ont une conductivité électrique inférieure à 50 µScm⁻¹, de préférence inférieure à 20 µScm⁻¹.

7. Composition nutritionnelle selon l'une quelconque des revendications précédentes, comportant en outre un ou plusieurs autres ingrédients alimentaires choisis parmi des agents aromatisants naturels ou artificiels, agents colorants naturels ou artificiels, édulcorants non nutritifs, conservateurs, régulateurs d'acidité, vitamines, minéraux, acides aminés, matières grasses, gélifiants, antioxydants, caféine, taurine et électrolytes ; dans laquelle le ou les agents aromatisants naturels ou artificiels sont choisis de préférence parmi des arômes de pomme, banane, cassis, myrtille, caramel, cerise, chocolat, cannelle, café, canneberge, raisin, pamplemousse, miel, kiwi, citron, citron vert, citron-citron vert, mangue, menthe, orange, pêche, ananas, framboise, fraise, mandarine, vanille, pastèque et équivalents de ceux-ci.

8. Composition nutritionnelle selon l'une quelconque des revendications précédentes, dans laquelle la composition a une turbidité inférieure à 50 NTU.

9. Emballage comprenant de 40 à 150 ml, de préférence de 50 à 100 ml, plus préférablement de 55 à 75 ml de la composition nutritionnelle selon l'une quelconque des revendications précédentes.

10. Emballage selon la revendication 9 choisi parmi une pochette flexible, un paquet ou un tube.

11. Procédé permettant de préparer la composition nutritionnelle selon l'une quelconque des revendications 1 à 8 comprenant les étapes suivantes :
(i) combinaison de la ou des maltodextrines avec de l'eau à une température allant de 60 à 90 °C et facultativement un ou plusieurs ingrédients alimentaires choisis parmi des agents aromatisants naturels ou artificiels, agents colorants naturels ou artificiels, édulcorants non nutritifs, conservateurs, régulateurs d'acidité, vitamines, minéraux, acides aminés, matières grasses, gélifiants, antioxydants, caféine, taurine et électrolytes pour former un gel ;
(ii) désaération du gel provenant de l'étape (i) ; et
(iii) facultativement, traitement thermique du gel par pasteurisation ou par traitement à ultra-haute température.

12. Procédé selon la revendication 11 dans lequel à l'étape (ii), le gel est désaéré en appliquant un vide, en traitant le gel avec des ultrasons ou en faisant passer de l'azote gazeux à travers le gel.

13. Procédé selon la revendication 11 ou 12 dans lequel à l'étape (iii),
a. si le pH du gel vaut au plus 4,5, le gel est traité thermiquement par pasteurisation, de préférence à 95 à 98 °C pendant 30 à 60 min,
b. si le pH du gel est supérieur à 4,5, le gel est traité à ultra-haute température (UHT), de préférence à 140 à 142 °C pendant 4 à 10 min.

14. Utilisation de la composition nutritionnelle selon l'une quelconque des revendications 1 à 8 pour consommation, de préférence pendant une performance athlétique pour améliorer ladite performance, dans laquelle seulement une ou deux portions de 55 à 75 ml de la composition nutritionnelle sont consommées par heure.
